# EUROPEAN PATENT SPECIFICATION

(11) **EP 3 076 208 B1**
(45) Date of publication and mention of the grant of the patent: **12.06.2019**
(21) Application number: 15000974.4
(22) Date of filing: 04.04.2015
(51) Int. Cl.: G02B 5/18, G02B 5/08

(54) **MULTI-LAYER REFLECTIVE DIFFRACTION GRATING AND USE THEREOF**
MEHRSCHICHTIGES REFLEXIONSBEUGUNGSGITTER UND VERWENDUNG DAVON
Réseau de diffraction réfléchissant multicouche et utilisation de celui-ci

(43) Date of publication of application: 05.10.2016
(73) Proprietor: Fyzikální ústav AV CR, v.v.i., 18221 Praha 8 (CZ)
(72) Inventor: Kalinchenko, Galina, 190 00 Prague 9 (CZ); Vyhlidka, Stepan, 154 00 Prague 5 (CZ)

(56) References cited:
- US-A1- 2009 059 375
- US-B2- 8 189 643
- VYHLIDKA STEPAN ET AL: "All-dielectric diffraction grating for multi-petawatt laser systems", PROCEEDINGS OF SPIE, S P I E - INTERNATIONAL SOCIETY FOR OPTICAL ENGINEERING, US, vol. 9442, 7 January 2015 (2015-01-07), pages 94421J-94421J, XP060045096, ISSN: 0277-786X, DOI: 10.1117/12.2086800
- JIAQING MO ET AL: "Porous silicon based on multilayer dielectric-grating optical sensors with enhanced biosensing", PHYSICA STATUS SOLIDI (A), vol. 211, no. 7, 28 July 2014 (2014-07-28) , pages 1651-1654, XP055212095, ISSN: 1862-6300, DOI: 10.1002/pssa.201431057
- ASTROVA E V ET AL: "Effective refractive index and composition of oxidized porous silicon films", MATERIALS SCIENCE AND ENGINEERIN, ELSEVIER, AMSTERDAM, NL, vol. 69-70, 1 January 2000 (2000-01-01), pages 142-148, XP004184318, ISSN: 0921-5107, DOI: 10.1016/S0921-5107(99)00236-6

## Description

### Field of Art

The present invention relates to wideband multi-layer dielectric diffraction gratings, particularly suitable for use in optical devices using radiation wavelengths greater than 750 nm.

### Background Art

Since the chirped pulse amplification (CPA) principle was introduced (D. Strickland and G. Mourou, Compression of amplified chirped optical pulses, Opt. Commun. 56, 219 (1985)), CPA laser systems were significantly developed and reached PetaWatt power in single shot regime (M. D. Perry et al., "Petawatt Laser Pulses," Optics Letters, Vol. 24 (1999), p. 160), and megahertz repetition rates with output average powers ranging from several tens to greater than 100 mW have been demonstrated. Chirped-pulse amplification has enabled lasers to produce powerful pulses in the femtosecond time regime. The development of high-power single shot and rep-rated high average power lasers is hampered by absorption of energy by traditional gold-coated diffraction gratings utilized in the compression stage. These limitations led to the development of multilayer dielectric (MLD) diffraction gratings. Modern generation of high power ultrafast lasers benefits from MLD diffraction gratings for pulse compression because of their high efficiency and low-loss characteristics. In spite of recent success, the problem to rise MLD grating diffraction efficiency over 96% (maximum achieved at the moment), maintaining high damage threshold and to keep wide bandwidth is still a challenge.

Basic MLD reflective grating structure comprises a multilayer dielectric mirror on a substrate and a dielectric layer with corrugation at the air side.

US patent No. 5907436 describes reflective diffraction grating which relates to grating design using dielectric materials. The gratings do not employ the use of metalloid (metalloids include silicon) layers.

US patent No. 4915463 describes reflective diffraction gratings with non-continuous silicon layers. The diffraction grating functions at X-ray to VUV wavelength.

### Disclosure of the Invention

The present invention, as defined in the appended claims, provides a multi-layer dielectric/silicon (MLDS) reflective diffraction grating which comprises, in the following order:
- a substrate,
- at least one bi-layer Si / transparent dielectric material with a lower refractive index than Si,
- a corrugated layer.

All layers apart from the corrugated layer are continuous layers, i.e., they extend over the whole area of the diffraction grating.

Suitable substrates are well known in the art. The substrate serves to provide support for the other layers and should have a thermal expansion coefficient similar to that of the remaining layers. Typically, substrates are made of UVFS, quartz, C798, BK7, MgF₂, CaF₂, Suprasil, optical crown glass, Infrasil 301, N-BAK1, SiC, silicon, low-thermal-expansion metal, or other suitable materials.

The dielectric material forming a bi-layer with Si is transparent and has a lower refractive index than that of Si. Suitable dielectric materials include, e.g., CaF₂, LiF, MgF, BaF₂ and optical glasses based on SiO₂.

In each bi-layer, the Si layer is oriented towards the substrate and the dielectric material layer is oriented towards the corrugated layer.

The corrugated layer bears the corrugation at its air side. Suitable materials are well known in the art. The corrugated layer is formed of a dielectric material which is transparent for the bandwidth the MLDS grating is designed, and which has high optical breakdown in case of high energy applications. Suitable materials for high energy applications include fused silica or CaF₂. For other possible applications the materials include optical glasses based on SiO₂, CaF₂, MgF₂, KBr, LiF, Al₂O₃, HfO₂, Al₂O₃, TiO₂, TaO₂, Nb₂O₅, photoresist or any other suitable material.

The MLDS grating of the invention may comprise further layers, preferably interposed between the layers listed above, so that the substrate and the corrugated layer form outward layers.

For high energy applications, the MLDS grating may further include at least one bi-layer of first dielectric layer / second dielectric layer, wherein the first dielectric layer has a refractive index higher than the second dielectric layer. Said bi-layer(s) is/are positioned between the corrugated layer and the Si / transparent dielectric bi-layer. The first dielectric layer of each bi-layer is oriented towards the substrate and the second dielectric layer is oriented towards the corrugated layer. In one preferred embodiment, the first and second dielectric layers may be made of materials selected from SiO₂, MgF₂, KBr, CaF₂, LiF, Al₂O₃, HfO₂, Al₂O₃, TiO₂, TaO₂, Nb₂O₅ in combinations fulfilling the condition of the first dielectric layer having a refractive index higher than the second dielectric layer. For example, the first dielectric layer may be made of HfO₂ or Nb₂O₅ and the second dielectric layer may be made of SiO₂.
The presence of further bi-layers serves to decrease most the risk of silicon layer optical breakdown. Damage fluence for Si is about 0.2 J/cm² (Y. P. Deng, X. H. Xie, H. Xiong, Y. X. Leng, C. F. Cheng, H. H. Lu, R. X. Li, and Z. Z. Xu, "Optical breakdown for silica and silicon with double femtosecond laser pulses," Opt. Express 13, 3096-3103 (2005)).

Silicon is a non-metallic element occurring extensively in the earth's crust in silica and silicates, having both an amorphous and a crystalline allotrope. It's a metalloid with a marked metallic luster and very brittle. The element silicon is used extensively as a semiconductor in solid-state devices in the computer and microelectronics industries. Silicon absorbs light with wavelength less than 1100 nm, and is non-transparent for visible light. The peak of silicon absorption is in the UV range and the absorption is decreasing for longer wavelength. At 750 nm its absorption coefficient is down to 1.3e3 cm⁻¹ (Martin A. Green, Solar Energy Materials & Solar Cells 92 (2008) 1305- 1310) and quarter-wave silicon layers absorb miniature amount of light energy because they are too thin. The reflection of the quarter-wave layers is high because of its high refractive index n_{Si} > 3.5, and they can be used in reflective stock for multi-layer diffraction grating at wavelength higher than 750 nm.

The MLDS grating according to the present invention comprises at least one silicon bilayer. The number of silicon bi-layers depends on required central wavelength.

In one preferred embodiment, a MLDS grating with at least three bi-layers of Si / transparent dielectric material with a lower refractive index than Si, and at least three bi-layers of first dielectric layer / second dielectric layer, is provided, which is particularly suitable for high power laser applications.

In another preferred embodiment, an MLDS grating with at least two bi-layers of Si / transparent dielectric material with a lower refractive index than Si, and at least four bi-layers of first dielectric layer / second dielectric layer, is provided.

The presence of Si-containing bi-layers allows achieving over 98 % of diffraction efficiency over the spectral band wider than 35 nm.
There is a variety of commercially used methods for the manufacturing of diffraction gratings. For example, one of them, called the secondary layer technique, is to fabricate a grating structure (corrugation) in a transparent dielectric layer to be placed on top of an independently designed multilayer structure. This method allows the multilayer stack to be designed either with or without the corrugation in place. The grating structure is constructed in a separate transparent dielectric layer, which is deposited on top of the multilayer stack. The grating pattern can be achieved by depositing the transparent dielectric through a holographically produced mask, in photosensitive material directly, or by other lithographic techniques.

The efficiency of a multilayer dielectric grating can be adjusted for any given wavelength and polarization by altering the phase retardation properties of the multilayer stack, the depth and shape of the grating grooves in the corrugated layer. These properties may be adapted to minimize the field intensity inside the corrugated layer and to adjust its shape to the possibilities of modern holographic manufacturing technologies.

Taking into account high power levels and repetition rates of modern ultrafast lasers, the present invention fulfills the following important parameters:
1) the corrugated layer and optionally the first dielectric/second dielectric bi-layer(s) provide sufficient LIDT (light intensity damage threshold);
2) the reflective multilayer mirror with the silicon layer(s) at the bottom has nearly 100% reflectivity, which provides more than 98% diffractive efficiency over the spectral band wider than 35 nm.

The present invention further provides use of the MLDS grating as described herein in optical devices (such as lasers or spectrometers) using radiation wavelengths greater than 750 nm, more preferably greater than 800 nm, for example in chirped pulse amplification with femtosecond lasers.

The present invention also provides use of a continuous silicon layer in MLDS gratings. More particularly, it provides for use of a continuous bi-layer Si / transparent dielectric material with a lower refractive index than Si in MLDS gratings.

### Brief Description of Drawings

Figure 1. Grating design: light gray - SiO₂, dark grey - HfO₂, black - silicon. All dimensions are in nanometers.
Figure 2. Diffraction efficiency vs wavelength for the diffraction grating with optimized corrugated layer, the dimensions of the corrugated layer are presented in Figure 1.
Figure 3. Grating design: light gray - SiO₂, dark grey - Nb₂O₅, black - silicon. All dimensions are in nanometers.
Figure 4. Diffraction efficiency vs wavelength for the diffraction grating with optimized corrugated layer, the dimensions of the corrugated layer are presented in Figure 3.

### Example of carrying out the Invention

### Example 1

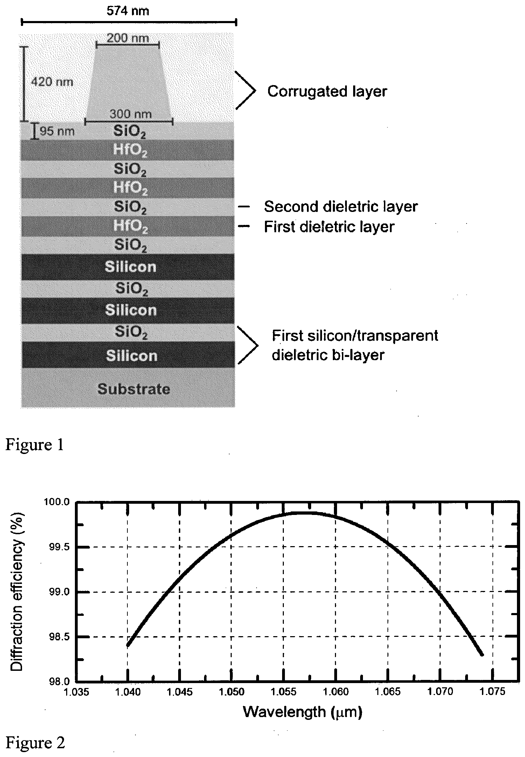

An example of the design of MLDS grating which is applicable for high energy ultrafast laser with non-Littrow compressor setup is shown in the Fig. 1. Three Si/SiO₂ bi-layers are deposited over SiO₂ substrate. Layers thicknesses were simulated in order to make quarter-wave layers with taking into account the angle of diffraction and refractive indexes of materials. The thickness of Si layer can be in the range of from 80 to 100 nm. The thickness of SiO₂ layers located between silicon layers is in the range from 180 to 230 nm. The thickness of SiO₂ layers located between HfO₂ layers is in the range from 195 to 210 nm. The thickness of HfO₂ layers is between 155 to 160 nm, the best result gives the configuration with upper layer of 155 and two following ones 160 nm.

The MLDS grating comprises three HfO₂/SiO₂ bi-layers to decrease most the risk of silicon layer optical breakdown. Damage fluence for Si is about 0.2 J/cm². The optical intensity on the first silicon layer is less than 2% of the intensity on corrugated layer. Thus, our grating has the same optical breakdown fluence as modern commercial MLD gratings (for Plymouth Gratings Inc., for example, this is > 1 J/cm²)

The efficiency of a multilayer dielectric grating can be adjusted for any given wavelength and polarization by altering the phase retardation properties of the multilayer stack, the depth and shape of the grating grooves in the corrugated layer. These properties may be adapted to minimize the field intensity inside the corrugated layer and to adjust its shape to the possibilities of modern holographic manufacturing technologies. Groove depth is in the range of 425 to 435 nm, the layer of the corrugated layer underneath the grooves is from 90 to 100 nm thick. The corrugated layer is made of SiO₂. The optimized efficiency is presented in Fig. 2.

Here we propose to incorporate three silicon/Si02 bi-layers into multilayer stack of a reflective diffraction grating for an enhancement of its diffraction efficiency over wide spectral band. We show a design of SiO₂/HfO₂/silicon diffraction grating with diffraction efficiency over 98%, central wavelength 1030 nm, angle of incidence 72°, bandwidth 35 nm and light intensity damage threshold fluence over 1 J/cm².

### Example 2

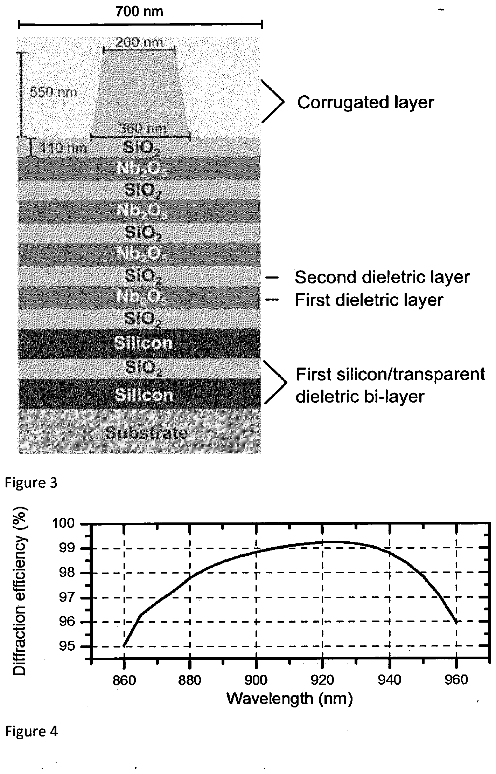

Another example of the design is shown in the Fig. 3. This design is suited for high-power broadband ultrafast lasers with Littrow compressor setup. The central wavelength is 910 nm. In this design two Si/Si02 bi-layers are deposited over SiO₂ substrate. Another four Nb₂O₅/SiO₂ bilayers are deposited above the Si/SiO₂ bi-layers in order to improve damage threshold of the structure as in the previous example. Thickness of each layer was chosen in order to achieve high diffraction efficiency by numerical simulations using Fourier modal method. Thickness of Si-layers is between 60-65 nm, the thickness of Nb₂O₅ layers is 100-120 nm and the thickness of SiO₂ layers is 110-190 nm. The corrugation layer is made of SiO₂ and compromises of periodic pattern of grooves as in a diffraction grating. The groove period is 700 nm, the groove depth is 550 nm and the groove width in the middle is 420 nm. The shape of the grooves in the corrugation layer is again optimized in order to maximize diffraction efficiency and minimize the reinforcement of electric field inside. The diffraction efficiency for the angle of incidence 41° is in the Fig.4. We show that the diffraction efficiency is above 95% for wavelengths ranging from 860 - 960 nm. The efficiency or the bandwidth could be further increased by adding additional bi-layers.

## Claims

1. A multi-layer reflective diffraction grating, **characterized in that** it comprises, in the following order:
- a substrate,
- at least one continuous bi-layer Si / transparent dielectric material with a lower refractive index than Si, wherein
- said bi-layer extends over the whole area of the diffraction grating; and
- a layer of Si is oriented towards the substrate; and
- a layer of the dielectric material layer is oriented towards the corrugated layer,
- a corrugated layer formed of a transparent dielectric material.

2. The multi-layer reflective diffraction grating according to claim 1, wherein the grating further includes at least one bi-layer of first dielectric layer / second dielectric layer, wherein the first dielectric layer has a refractive index higher than the second dielectric layer, and said bi-layer(s) is/are positioned between the corrugated layer and the Si / transparent dielectric material bi-layer.

3. The multi-layer reflective diffraction grating according to claim 2, wherein the grating comprises at least three bi-layers of Si / transparent dielectric material with a lower refractive index than Si, and at least three bi-layers of first dielectric layer / second dielectric layer.

4. The multi-layer dielectric reflective diffraction according to claim 2, wherein the grating comprises at least two bi-layers of Si / transparent dielectric material with a lower refractive index than Si, and at least two bi-layers of first dielectric layer / second dielectric layer, is provided.

5. Use of the multi-layer reflective diffraction grating according to any one of claims 1 to 4 in optical devices using radiation wavelengths greater than 750 nm.

6. Use of a continuous bi-layer Si / dielectric material with a lower refractive index than Si in a multi-layer dielectric grating according to claim 1,

## Patentansprüche

1. Mehrschichtiges Reflexionsbeugungsgitter, **dadurch gekennzeichnet, dass** es in der folgenden Reihenfolge umfasst:
- eine Auflage,
- mindestens ein kontinuierliches zweischichtiges Si/transparentes dielektrisches Material mit einem niedrigen als Si Brechungsindex, wobei
- die genannte Zweischicht sich über die gesamte Fläche des Beugungsgitters erstreckt; und
- eine Schicht aus Si gegen die Auflage ausgerichtet ist; und
- eine Schicht des dielektrischen Materials gegen die gewellte Schicht ausgerichtet ist,
- eine gewellte Schicht aus einem transparenten dielektrischen Material gebildet ist.

2. Mehrschichtiges Reflexionsbeugungsgitter nach Anspruch 1, **dadurch gekennzeichnet, dass** das Gitter mindestens eine Zweischicht aus einer ersten dielektrischen Schicht/zweiten dielektrischen Schicht noch enthält, wobei die erste dielektrische Schicht einen höheren als die zweite dielektrische Schicht Brechungsindex hat, und die genannte Zweischicht (die genannten Zweischichten) zwischen der gewellten Schicht und Si/transparenter dielektrischer Material-Zweischicht angeordnet ist.

3. Mehrschichtiges Reflexionsbeugungsgitter nach Anspruch 2, **dadurch gekennzeichnet, dass** das Gitter mindestens drei Zweischichten aus Si/transparentem dielektrischem Material mit einem niedrigen als Si Brechungsindex und mindestens drei Zweischichten aus erster dielektrischer Schicht/zweiter dielektrischer Schicht enthält.

4. Mehrschichtige dielektrische Reflexionsbeugung nach Anspruch 2, **dadurch gekennzeichnet, dass** das Gitter, das mindestens zwei Zweischichten aus Si/transparentem dielektrischem Material mit einem niedrigen als Si Brechungsindex und mindestens zwei Zweischichten aus erster dielektrischer Schicht/zweiter dielektrischer Schicht enthält, vorgesehen ist.

5. Verwendung des mehrschichtigen Reflexionsbeugungsgitters nach einem der Ansprüche 1-4 in optischen Vorrichtungen unter Benutzung der Strahlungswellenlängen größer als 750 nm.

6. Verwendung eines kontinuierlichen zweischichtigen Si/transparenten dielektrischen Materials mit einem niedrigen als Si Brechungsindex in einem mehrschichtigen dielektrischen Gitter nach Anspruch 1.

## Revendications

1. Un réseau de diffraction réfléchissant à multicouches, **caractérisé en ce qu'**il comprend, dans l'ordre suivant:
- un substrat,
- au moins une bicouche continue de Si/un matériau diélectrique transparent avec un indice de réfraction inférieure à celui de Si, dans lequel
- ladite bicouche s'étend sur toute la région du réseau de diffraction; et
- une couche de Si est orientée vers un substrat; et
- une couche du matériau diélectrique est orientée vers une couche ondulée,
- une couche ondulée est formée du matériau diélectrique transparent.

2. Le réseau de diffraction réfléchissant à multicouches selon la revendication 1, dans lequel le réseau comprend aussi au moins une bicouche de la première couche diélectrique/la seconde couche diélectrique, dans lequel la première couche diélectrique a un indice de réfraction supérieur à celui de la seconde couche diélectrique, et ladite bicouche(s) est/sont positionnée(s) entre la couche ondulée et bicouche de Si/matériau diélectrique transparent.

3. Le réseau de diffraction réfléchissant à multicouches selon la revendication 2, dans lequel le réseau comprend au moins trois bicouches de Si/matériau diélectrique transparent avec un indice de réfraction inférieure à celui de Si, et au moins trois bicouches de la première couche diélectrique/la seconde couche diélectrique.

4. La diffraction réfléchissant à multicouches diélectriques selon la revendication 2, dans lequel le réseau comprend au moins deux bicouches de Si/matériau diélectrique transparent avec un indice de réfraction inférieure à celui de Si, et au moins deux bicouches de la première couche diélectrique/la seconde couche diélectrique, est fourni.

5. Utilisation du réseau de diffraction réfléchissant à multicouches selon l'une quelconque des revendications 1 à 4 dans un dispositif optique utilisant les longueurs d'onde de rayonnement supérieures à 750 nm.

6. Utilisation de la bicouche continue de Si/matériau diélectrique avec un indice de réfraction inférieure à celui de Si dans un réseau à multicouches diélectriques selon la revendication 1.
